# EUROPEAN PATENT APPLICATION

(11) **EP 1 967 413 A1**
(43) Date of publication of application: **10.09.2008**
(21) Application number: 07103793.1
(22) Date of filing: 08.03.2007
(51) Int. Cl.: B60N 2/48

(54) **Headrest unit for a motor-vehicle seat, provided with an anti-whiplash device**

(71) Applicant: Martur Sunger ve Koltuk Tesisleri Ticaret Sanayi A.S., 80670 Maslak Istanbul (TR)
(72) Inventor: Turletti, Massimo, 10149 Torino (IT)
(74) Representative: Notaro, Giancarlo

(57) **Abstract**

A headrest unit for a motor vehicle seat comprising a headrest supporting structure (2) which can be fixed to the structure of the seat backrest, and a headrest frame (6), provided with a headrest padding (9) and pivotally mounted on the supporting structure (2) around a horizontal axis (7). The frame (6) is movable between a position of normal use and a forwardly rotated position. First spring means (8) tend to bias the frame (6) towards the forwardly rotated position. The frame is held in its position of normal use by a primary lock bolt (13). The primary lock bolt (13) is subjected to the action of second spring means (16) which tend to bias it towards a position disengaged from a cooperating seat (15) of the headrest supporting structure (2). The primary lock bolt (13) is held in its engaged condition by a secondary lock bolt (18). In case of a rear collision of the motor vehicle, an inertial mass (28) causes disengagement of the secondary lock bolt (18) with resulting disengagement of the primary lock bolt (13) and forward rotation of the headrest due to the action of the first spring means (8).

## Description

The present invention relates to headrest units for motor-vehicle seats, of the type comprising:
- a headrest supporting structure which can be fixed to the backrest structure of the seat,
- a headrest padding, pivotally mounted on said supporting structure around a horizontal transverse axis and movable between a position of normal use and a forwardly rotated position, and
- an inertial mass carried by the headrest frame, for causing a movement of the headrest frame from the position of normal use to the forwardly rotated position, following a rear collision of the motor-vehicle.

A headrest unit having the above indicated features is disclosed for instance in US-A-5 934 750.

The object of the present invention is that of providing a headrest unit of the above indicated type which has a relatively simple and reliable structure.

In view of achieving this object, the invention provides a headrest unit having the above described features, and further characterized in that:
between the headrest frame and the headrest supporting structure there are interposed first spring means for biasing the headrest towards the forwardly rotated position,
on the headrest frame there is mounted a primary locking member, which engages the supporting structure so as to keep the headrest frame in his normal position of use, against the action of said first spring means,
between the primary locking member and the headrest frame there are interposed second spring means which tend to bias the primary locking member towards a position disengaged from the headrest supporting structure,

- the headrest frame carries a secondary locking member which is elastically pushed towards a position in which it locks the primary locking member in its engaged position, against the action of said second spring means, and
- said inertial mass is arranged to force the secondary locking member towards a position disengaged from the primary locking member following a rear collision of the motor-vehicle.

In the preferred embodiment, the headrest frame is pivotally mounted on the headrest supporting structure at an upper portion thereof. The above mentioned first spring means comprise at least one spring interposed between the supporting structure and a lower portion of the headrest frame, tending to move this lower portion of the frame forwardly, so as to rotate the headrest frame around its upper articulation. Also in the case of this embodiment, the primary locking member is constituted by one element slidably and vertically guided with respect to the headrest frame and having a lower active end adapted to be received into a cooperating receiving element fixed to the headrest supporting structure. The second spring means comprise at least one spring tending to bias said primary locking member upwardly so as to cause the lower end thereof to come out from said receiving element. Finally, also in the case of the above mentioned preferred embodiment, the inertial mass is constituted by a metal ball guided along an axis parallel to the longitudinal direction of the seat within a cylindrical bush carried by the headrest frame. This ball cooperates with a piston member which is biased by a spring against the ball and is operatively connected to the secondary locking member which holds the primary locking member locked in its engaged condition with respect to the headrest supporting structure. In the case of a rear collision of the motor vehicle, the ball is moved in the direction of the rear end of its guiding bush thus causing the movement of the piston cooperating therewith and hence the disengagement of the secondary locking member from the primary locking member. The latter is thus free to disengage from the headrest supporting structure as a result of the force exerted by said second spring means. Once the primary locking member has been disengaged, the above mentioned first spring means are free to cause the forward rotation of the headrest around its upper articulation axis, so that the padded body of the headrest provides the required support for the occupant's head, thus preventing the harmful consequences of the so called "whiplash".

Therefore, it is clearly apparent from the foregoing, on one hand the headrest unit according to the invention has a relatively simple and inexpensive structure and on the other hand it ensures a reliable operation with particular reference to a prompt forward rotation of the headrest in the case of a rear collision of the motor vehicle.

Once the anti-whiplash device has been activated, the headrest can then be restored to the normal condition of use by a manual operation. In this case, it is necessary to rotate the headrest back rearwardly, to its position of normal use, to cause the engagement of the primary locking member on the supporting structure and to lock this primary locking member in this locking condition with the aid of the secondary locking member. Preferably, in order to have an easy access to the above mentioned parts, the headrest frame is constituted by a hollow structure which is open at the bottom.

Further features and advantages of the invention will become apparent from the following description with reference to the annexed drawings, given purely by way of non limiting example, in which:

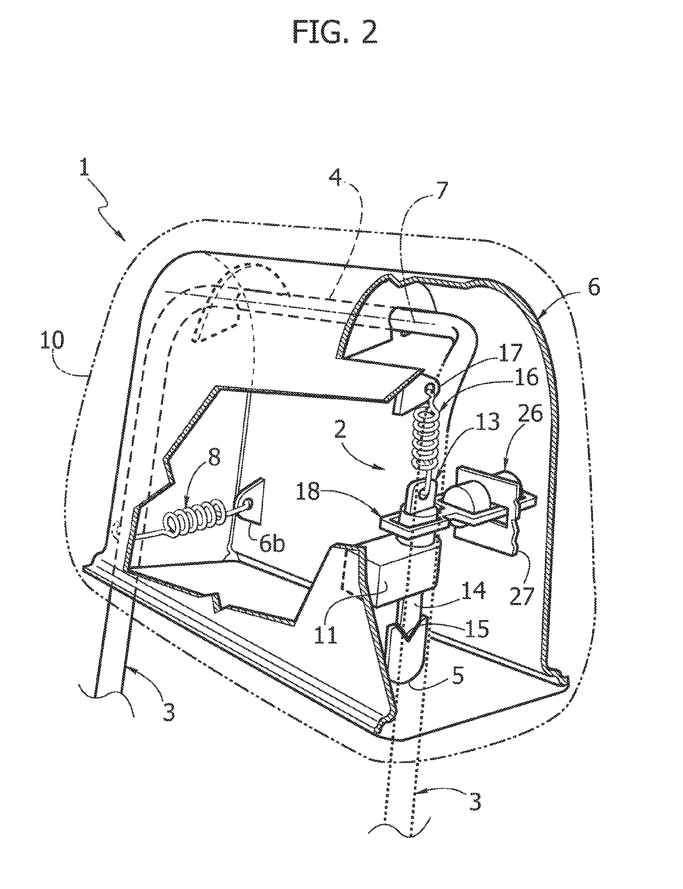

figures 1, 2 are a diagrammatic cross-sectional view and a perspective view of a headrest unit according to a preferred embodiment of the invention, and
figure 3 is a diagrammatic perspective view of a detail of figure 2.

With reference to the drawings, numeral 1 generally designates a headrest comprising a supporting structure 2 of metal material which, in a way known per se, includes two vertical rods 3. The lower ends of the vertical rods 3 are to be received and locked within cooperating receiving bushes (not shown) provided on the structure of the seat backrest, in a way known per se. The details relating to this coupling are not described nor shown herein, since they do not fall within the scope of the present invention and also because their deletion from the drawings renders the latter simpler and easier to understand.

The two vertical rods 3 constituting the supporting structure 2 are connected at their upper ends by a cross-member 4. Furthermore, on one of these rods 3 there is fixed (for instance welded) an element 5 having a receiving seat 15, whose function will become apparent in the following.

Reference numeral 6 generally designates the frame of the headrest, which in the illustrated example is constituted by a hollow structure, of metal or plastic material, and open at the bottom so as to provide easy access to the inner parts of the headrest through its lower mouth 6a. The frame 6 is pivotally mounted on the upper cross-member 4 of the supporting structure 2 around a horizontal transverse axis 7.

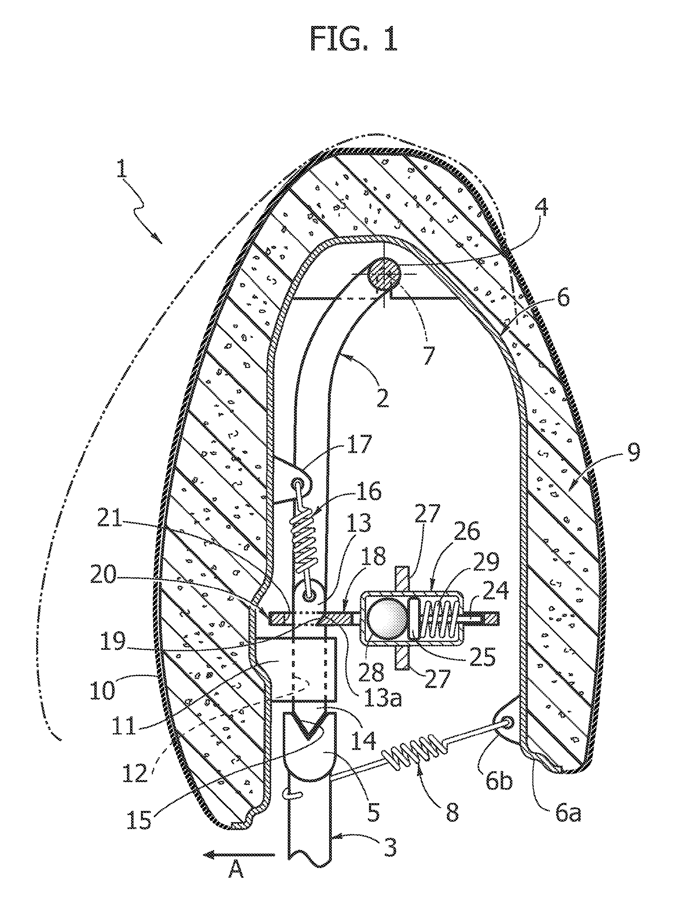

In the present description, and in the following claims, by the expression "longitudinal direction" of the headrest a direction is meant which is parallel to the longitudinal direction of the motor vehicle in the mounted condition of the headrest on the motor vehicle seat. By the expression "horizontal transverse direction" reference is made to a horizontal direction orthogonal with respect to the above mentioned longitudinal direction. Furthermore, wherever in the present description reference is made to the "front" side or the "rear" side of the headrest, reference is made to the sides facing the front part and the rear part of the motor vehicle, respectively, in the mounted condition of the headrest on the motor vehicle seat. Figure 1 shows the headrest according to the invention in its position of normal use. Starting from this position, the headrest is able to rotate around its upper articulation axis 7, with a forward movement (i.e. a movement in the direction of arrow A in figure 1) of its rear part. The headrest is provided with first spring means which in the illustrated example comprise a helical spring 8 connected at its ends to a respective vertical rod 3 of the fixed supporting structure 2, and to one ear 6b formed in the lower part of the rear portion of the headrest frame 6. In the illustrated condition, spring 8 is in a tensioned deformed condition, so that it tends to bias the frame 6 towards a forwardly rotated position, corresponding to a forward movement of its lower part.

By 9 there is generally designated the padded body, which, according to the conventional technique, covers the headrest frame 6 and is for instance made of foamed plastic. On its turn, body 9 is covered by a covering layer 10. In figure 1 there is shown by dotted line the position reached by the front surface of the headrest padding in the forwardly rotated condition.

Frame 6 is provided at the inside thereof with a body 11 which is fixed to the front wall of the frame 6 and has a guiding passage 12, having a vertical axis, within which there is slidably guided a lock bolt 13 constituting the primary locking member of the device. In the condition illustrated in figure 1, the lock bolt 13 is in its active position, in which its lower end 14 is engaged within the seat 15 formed in the receiving element 5.

Reference numeral 16 designates a helical spring constituting a second spring means which is interposed between the lock bolt member 13 and an ear 17 fixed to the wall of the frame 6. In the illustrated condition, the spring 16 is in a deformed tensioned condition, so that it tends to bias the lock bolt member 13 towards a raised position in which its lower end 14 is disengaged from seat 15.

Also with reference to figure 1, in condition of normal use, the lock bolt member 13 is held in its illustrated operative position, against the action of spring 16, by a secondary lock bolt 18, constituting a secondary locking member of the device.

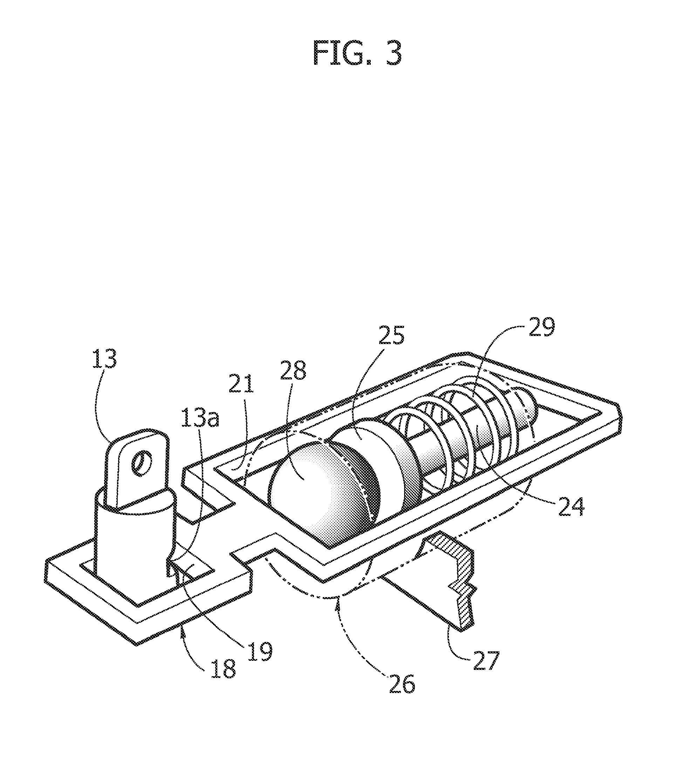

As visible also in figure 3, the secondary lock bolt 18 has an operative portion 19 which is constituted by an inner edge of a frame-like structure 20 having a central opening 21 through which there is arranged the primary lock bolt 13. The frame-like structure 20 forms part of a movable unit 22 including a further frame-like structure 23. To the rear side of the frame-like structure 23 there is connected an axial stem 24 ending with a piston 25 which is movable within a cylindrical bush 26. The cylindrical bush 26 has its axis directed in the longitudinal direction of the headrest and is supported by means of brackets 27 by the frame 6. Within the bush 26 there is guided an inertial mass constituted by a metal ball 28 which is in contact on its rear side with a piston 25. On its turn, the latter is held against the ball 28 by a helical spring 29 arranged within the bush 26.

The operation of the above described structure is the following:
in the normal operative condition, the body of the headrest is in the condition shown by undotted lines in figure 1. In this condition, the headrest frame 6 is held in its position of normal use, against the action of the first spring means constituted by spring 8, since the primary lock bolt 13 has its lower end 14 engaging the receiving element 5 which is rigidly connected to the headrest supporting structure 2. In this condition, therefore, the frame 6 is not free to rotate around its upper articulation axis 7. The primary lock bolt 13 is held in its condition of engagement within the cooperative seat 15, against the action of the second spring means constituted by spring 16, by the secondary lock bolt 18. On its turn, the latter is held in its active condition by spring 29 which has its end on the right in figure 1 in engagement with the end wall of the bush 26, bush 26 being rigidably connected to frame 6. The end of spring 29 on the left in figure 1 pushes piston 25 leftwardly, thus pushing the entire unit 22 leftwardly (with reference to figure 1) which causes engagement of the active portion 19 (figure 3) into a seat 13a formed in the primary lock bolt 13.

In the case of a rear collision of the motor vehicle, the inertial mass 25 is moved rearwardly (i.e. rightwardly with reference to the figures) with respect to bush 26. This movement takes place against the action of spring 29, which is adjusted to enable movement of the ball only above a determined value of acceleration.

The movement of ball 28 is transmitted to piston 25 and hence to stem 24 and the entire unit 22 with a resulting disengagement of the active portion 19 of the secondary lock bolt 18 from seat 13a of the primary lock 13. This disengagement causes the immediate raising of the primary lock bolt 13 due to the action of spring 16, with a resulting disengagement of the lower end of the primary lock bolt 13 from the seat 15 of the receiving element 5. As soon as the locking member 13 has moved to its disengagement position, the first spring means constituted by spring 8 are therefore able to cause forward movement of the lower portion of the headrest, with a resulting rotation forwardly of the headrest (clockwise with reference to figure 1) around the upper articulation axis 7 (see dotted line in figure 1) . The forward movement of the headrest insures the required support to the occupant's head while preventing the latter from being subjected to the so-called whiplash due to the rear collision.

Once the anti-whiplash device has been activated, the headrest can be restored to the condition of normal use by a manual operation. To this end, the headrest is rotated back rearwardly to its normal position of use, the primary lock bolt 13 is manually held in its lowered position engaged within seat 15 and the secondary lock bolt 18 is restored to its position engaging the primary lock bolt 13 so as to ensure that the device is again held in the condition shown in figure 1. The above mentioned operations are made easier by that access to the inner parts of the headrest is possible through the lower mouth 6a of frame 6.

Preferably, to the unit according to the invention there is associated a device able to lock the headrest in its forwardly rotated position after a collision. For instance, this device can be constituted by a linkage which reaches a no-return condition in the forwardly rotated position of the headrest, thus preventing the latter from going back to its condition of normal use.

Naturally, while the principle of the invention remains the same, the details of construction and the embodiments may widely vary with respect to what has been described and illustrated without departing from the scope of the present invention.

## Claims

1. Headrest unit for a motor vehicle seat, comprising:
- a headrest supporting structure (2), which can be fixed to the structure of the seat backrest,
- a headrest frame (6), provided with a headrest padding (9), pivotally mounted on said supporting structure (2) around a horizontal transverse axis (7) and movable between a position of normal use and a forwardly rotated position,
- an inertial mass (28), carried by the headrest frame (6), to cause a movement of the headrest frame from the position of normal use to the forwardly rotated position following a rear collision of the motor vehicle,
**characterized in that**:
- between the headrest frame (6) and the headrest supporting structure (2) there are interposed first spring means (8) for biasing the headrest frame towards the forwardly rotated position,
- on the headrest frame (6) there is mounted a primary locking member (13) which engages the supporting structure (2) so as to hold the headrest frame (6) in its position of normal use, against the action of said first spring means (8),
- between the primary locking member (13) and the headrest frame (6) there are interposed second spring means (16) which tend to bias the primary locking member (13) towards a position disengaged from the headrest supporting structure (2),
- the headrest frame (6) carries a secondary locking member (18) which is elastically pushed to a position in which it holds the primary locking member in its locked condition, against the action of said second spring means (16), and
- said inertial mass (28) is arranged to push the secondary locking member (18) towards a position disengaged from the primary locking member (13) following a rear collision of the motor vehicle.

2. Headrest unit according to claim 1, **characterized in that** the headrest frame (6) is pivotally mounted around said horizontal transverse axis (7) at an upper portion thereof.

3. Headrest unit according to claim 1, **characterized in that** said first spring means (8) comprises at least one spring interposed between the headrest supporting structure (2) and a lower portion of the headrest frame (6) and tending to bias this lower portion forwardly.

4. Headrest unit according to claim 1, **characterized in that** this primary locking member (13) is constituted by a lock bolt member slidably and vertically mounted within a guiding body (11) fixed to the headrest frame (6) and having one lower active end (14) able to cooperate with a seat (15) formed in a receiving element (5) forming part of the headrest supporting structure (2).

5. Headrest unit according to claim 4, **characterized in that** said second spring means (16) comprise at least one spring interposed between said primary lock bolt (13) and the headrest frame (6) and tending to bias this primary lock bolt member (13) upwardly.

6. Headrest unit according to claim 1, **characterized in that** said inertial mass is constituted by a ball (28) guided within a bush (26) carried by the frame (6) of the headrest and having its axis directed parallel to the longitudinal direction of the headrest.

7. Headrest unit according to claim 6, **characterized in that** said ball (28) cooperates on its side facing rearwardly with a piston (25) movable within said guiding bush (26) and pushed against said ball (28) by a spring (29) arranged within said guiding bush (26), said piston (25) being operatively connected to said secondary locking member so that a movement of the ball (28) towards the rear end of the guiding bush (26) causes the disengagement of said secondary locking member (18) from the primary locking member (16).

8. Headrest unit according to claim 6, **characterized in that** said secondary locking member is constituted by a lock bolt part (19) defined by an edge of one side of a frame-like structure (20) defining a central opening (21) through which there is arranged the above mentioned primary locking member (13), said edge (19) being adapted to cooperate with a seat (13a) formed in the body of said primary locking member (13).

9. Headrest unit according to any of the previous claims, **characterized in that** said headrest frame (6) has a hollow structure open at the bottom, so as to have a lower mouth (6a) through which access is provided to the inner parts of the headrest.
